# EUROPÄISCHE PATENTSCHRIFT

(11) **EP 2 144 091 B1**
(45) Veröffentlichungstag und Bekanntmachung des Hinweises auf die Patenterteilung: **09.03.2011**
(21) Anmeldenummer: 09163513.6
(22) Anmeldetag: 23.06.2009
(51) Int. Cl.: G01V 8/20

(54) **Doppelstrahloptik für Lichtgitter**
Double ray laser for lighting grid
Optique à rayonnement double pour barrières lumineuses

(30) Priorität: 08.07.2008 DE 102008032161
(43) Veröffentlichungstag der Anmeldung: 13.01.2010
(73) Patentinhaber: SICK AG, 79183 Waldkirch (DE)
(72) Erfinder: Henkel, Olaf, 79276 Reute (DE)
(74) Vertreter: Ludewigt, Christoph

(56) Entgegenhaltungen:
- EP-B- 0 310 932
- CH-A- 352 509
- DE-A1- 3 709 500
- DE-A1- 4 422 497
- JP-A- 2004 257 885

## Beschreibung

Die Erfindung betrifft ein Verfahren zur berührungslosen Erfassung eines Objektes innerhalb einer Überwachungsfläche. Zu diesem Zweck sind auf einer Seite der Überwachungsfläche mehrere Lichtsender und auf der gegenüberliegenden Seite der Überwachungsfläche mehrere Lichtempfänger nebeneinander angeordnet. Von einer Steuereinheit werden die Lichtsender und Lichtempfänger paarweise, zeitlich nacheinander und zyklisch aktiviert, so dass die Überwachungsfläche mit mehreren parallel zueinander angeordneten Lichtstrahlen durchdrungen wird.

Der Begriff "Licht" ist dabei nicht auf das sichtbare Licht beschränkt. Unter "Licht" ist allgemein die elektromagnetische Strahlung, vom UV-Bereich über den sichtbaren Bereich bis zum IR-Bereich zu verstehen, die üblicherweise zur berührungslosen Objekterfassung eingesetzt werden kann. Weiterhin ist die Erfindung auf eine Vorrichtung zur Durchführung eines solchen Verfahrens gerichtet.

Solche Verfahren sowie solche Vorrichtungen werden insbesondere in Form eines mehrstrahligen Lichtgitters beispielsweise als Schutzeinrichtungen an gefährlichen Werkzeugmaschinen verwendet. Damit bei diesen Lichtgittern eine Betriebsfunktion auch dann vorhanden ist, wenn das Lichtgitter am Einsatzort einer Schock- und/oder Vibrationsbelastung ausgesetzt wird, senden die Lichtsender mittels einer zugeordneten Sendelinse ihr Licht nicht in Form eines dünnen parallelen Lichtstrahles, sondern in Form eines sich öffnenden Sendekegels aus. In analoger Weise sind die Lichtempfänger so dimensioniert, dass sie über eine zugeordnete Empfangslinse alles Licht aufnehmen, das aus einem bestimmten Empfangskegel kommend auf den Lichtempfänger auftrifft. Dadurch wird sichergestellt, dass auch bei einer nicht hundertprozentigen Ausrichtung der Lichtsender zu den Lichtempfängern beziehungsweise von den Lichtempfängern zu den Lichtsendern, die Funktionssicherheit des Lichtgitters gewährleistet ist. Diese notwendige Divergenz im Sendekegel bei den Lichtsendern beziehungsweise die Konvergenz im Empfangskegel bei den Lichtempfängern hat jedoch den Nachteil, dass ein Lichtsender gleichzeitig mehrere Lichtempfänger beleuchtet und ein Lichtempfänger gleichzeitig das Licht von mehreren Lichtsendern aufnehmen kann. Die Folge davon ist, dass ein mögliches Objekt innerhalb der Überwachungsfläche dann zwar den Lichtweg von einem Lichtsender zu einem Lichtempfänger unterbricht, gleichzeitig jedoch der Lichtweg von diesem Lichtsender zu einem daneben angeordneten Lichtempfänger ungestört vorhanden ist. Dieser Effekt, der insbesondere mit zunehmender Distanz zwischen den Lichtsendern und den Lichtempfängern zunimmt, wird auch als optisches Übersprechen bezeichnet. Eine zuverlässige Detektion eines Objekts ist aufgrund dieses Übersprechens ohne zusätzliche Maßnahmen nicht sicher gestellt. Um dieses Fehlverhalten auszuschließen, werden nach dem Stand der Technik die zusammenwirkenden Lichtsender sowie die dazugehörenden Lichtempfänger immer nur paarweise von der Steuereinheit zeitlich nacheinander aktiviert. Dieser Vorgang wird nach einem vorgegebenen Ablaufplan in kurzer zeitlicher Folge zyklisch wiederholt. Auf diese Weise entsteht innerhalb der Überwachungsfläche ein optisches Gitter, d. h. ein Lichtgitter, das in der Lage ist, ein Objekt, welches zumindest einen Lichtstrahl von einem Lichtsender zu einem Lichtempfänger vollständig unterbricht, sicher zu erkennen. Wenn auf diesem Wege ein Objekt erkannt wird, wird beispielsweise ein entsprechendes optisches und/oder akustisches Warnsignal abgegeben bzw. die gefahrbringende Maschine stillgesetzt.

Ein wesentliches Merkmal eines Lichtgitters ist sein Detektionsvermögen. Damit wird beschrieben, welche Mindestgröße ein Objekt haben muss, damit dieses an jeder Stelle innerhalb der Überwachungsfläche sicher erkannt werden kann. Dieses Merkmal des Detektionsvermögens wird von dem wirksamen Querschnitt eines Lichtstrahls zwischen der Sendeoptik und der Empfangsoptik sowie dem Abstand der Lichtstrahlen untereinander vorgegeben. Es ist deshalb keine Seltenheit, dass aufgrund eines erforderlichen Detektionsvermögens und/oder einer großen Ausdehnung in der Höhe der Überwachungsfläche in einem Lichtgitter mehrere hundert Lichtstrahlen vorhanden sein müssen.

Weil es zur Vermeidung des Übersprechens innerhalb des Lichtgitters erforderlich ist, dass die zusammenwirkenden Lichtsender sowie die dazugehörenden Lichtempfänger immer nur sequentiell, d. h. zeitlich nacheinander aktiviert werden können, wird insbesondere bei einem Lichtgitter mit vielen einzelnen Lichtstrahlen eine relativ lange Zeit benötigt, bis die Überwachungsfläche vollständig überprüft ist. Dies ist besonders dann von Nachteil, wenn die zu überwachende Maschine oder Anlage schnell läuft und aufgrund einer geringen Reaktionszeit des Lichtgitters relativ große Sicherheitsabstände zur gefahrbringenden Einrichtung eingehalten werden müssen. Gleichermaßen müssen dadurch auch Objekte, die schnell die Überwachungsfläche durchdringen, eine große Ausdehnung in der Bewegungsrichtung aufweisen, damit sie überhaupt erkannt werden können. Ein weiterer Nachteil bei den aus dem Stand der Technik bekannten Lichtgittern ist darin zu sehen, dass wegen des geforderten Detektionsvermögens viele Lichtstrahlen und damit viele Lichtsender und Lichtempfänger erforderlich sind, wodurch zwangsläufig hohe Herstellkosten verursacht werden.

Aus der DE 44 22 497 A1 ist ein Lichtgitter bekannt, bei dem sich jeweils ein Sender und ein Empfänger gegenüberstehen. Das Sendelicht weist dabei eine Strahlkeule auf, so dass dieses auf mehrere Empfänger treffen kann. Um ein solches Übersprechen des Sendelichts auf benachbarte Empfänger zu vermeiden, werden zweckmäßigerweise die sich gegenüberliegenden Sender-Empfängerpaare nacheinander aktiviert.

Die Zusammenfassung der JP 2004-257885 offenbart einen Infrarotempfänger mit mehreren Empfangselementen mit jeweils einem optischen Filter mit einer bestimmten Wellenlänge zur Vermeidung eines Übersprechens.

Aus der EP 0 310 932 B1 ist eine Reflexionslichtschranke bekannt mit einem Sender und zwei Empfängern mit jeweils angeordneten Polfiltern, wobei die Polarisationsebenen der beiden Empfangspolfilter zueinander rechtwinklig verlaufen.

Der Erfindung liegt die Aufgabe zugrunde, ein Verfahren und eine Vorrichtung der eingangs erwähnten Art derart auszubilden, dass bei Ausschluß eines möglichen Übersprechens und unter Beibehaltung des Detektionsvermögens die Anzahl der benötigten Lichtsender oder Lichtempfänger verringert wird und gleichzeitig die Zeit für einen vollständigen Überprüfungszyklus der gesamten Überwachungsfläche reduziert wird.

Der das Verfahren betreffende Teil der Aufgabe wird ausgehend von einem Verfahren der eingangs genannten Art erfindungsgemäß durch die Merkmale des Anspruch 1 gelöst, welcher dadurch gekennzeichnet ist, dass zwei benachbarte Lichtsender mit einem Lichtempfänger oder ein Lichtsender mit zwei benachbarten Lichtempfängern eine Doppellichtstrahlenanordnung bilden, wobei die beiden Lichtstrahlen der Doppellichtstrahlenanordnung von der Steuereinheit getrennt oder gemeinsam aktiviert werden und dabei gleiche oder sich gegenseitig nicht beeinflussende optische Strahleigenschaften aufweisen.

Der den optoelekronischen Sensor betreffende Teil der Aufgabe wird ausgehend von einer Vorrichtung der eingangs genannten Art erfindungsgemäß durch die Merkmale des Anspruch 5 gelöst, welcher dadurch gekennzeichnet ist, dass zwei benachbarte Lichtsender mit einem Lichtempfänger oder ein Lichtsender mit zwei benachbarten Lichtempfängern eine Doppellichtstrahlenanordnung bilden, wobei zur zeitlich getrennten Aktivierung der beiden Lichtstrahlen der Doppellichtstrahlenanordnung eine Steuereinheit vorhanden ist und dass jeweils eine für beide Lichtstrahlen gemeinsame Empfangsoptik oder Sendeoptik in ihrem Querschnitt in Form einer Pupillenteilung geometrisch in zwei optisch getrennte, sich gegenseitig nicht beeinflussende Querschnittsbereiche aufgeteilt ist.

Der Vorteil dieser Erfindung ist darin zu sehen, dass es durch den Einsatz der Doppellichtstrahlenanordnung möglich ist, ohne Reduzierung des Detektionsvermögens des Lichtgitters, die Anzahl der Lichtsender/Lichtempfänger zu verringern, wodurch günstigere Herstellkosten und/oder geringere Zeiten zur Überprüfung der Überwachungsfläche möglich sind.

In einer Ausführungsform der Erfindung ist es vorgesehen, dass die beiden Lichtstrahlen der Doppellichtstrahlenanordnung unterschiedliche oder gegensätzliche spektrale Transmissionseigenschaften aufweisen und von der Steuereinheit zeitlich versetzt aktiviert werden. Dies bedeutet, dass die Doppellichtstrahlenanordnung mit nur einem Lichtempfänger oder nur einem Lichtsender beispielsweise aus einem roten und einem grünen Lichtstrahl besteht und aufgrund dieser spektralen Trennung die einzelnen Strahlanordnungen sich nicht gegenseitig beeinflussen.

In einer weiteren Ausführungsform der Erfindung ist es vorgesehen, die gegensätzliche Trennung der beiden Lichtstrahlen der Doppellichtstrahlenanordnung mit Hilfe von unterschiedlich orientierten Polarisationsfiltern zu realisieren. In diesem Fall bestehen die beiden zeitlich versetzt aktivierten Lichtstrahlen der Doppellichtstrahlenanordnung beispielsweise aus zwei linear polarisierten Lichtstrahlen, deren Schwingungsrichtung zueinander gekreuzt ist. In gleicher Weise ist es ebenfalls vorgesehen, die unterschiedliche Polarisationseigenschaft der beiden Lichtstrahlen der Doppellichtstrahlenanordnung durch die Verwendung von Lichtstrahlen mit rechts und links zirkular drehender Orientierung zu realisieren.

Die Trennung der beiden Lichtstrahlen in der Doppellichtstrahlenanordnung mit Hilfe der spektralen Transmission oder dem Polarisationverhatten hat den großen Vorteil, dass zumindest ein Lichtempfänger mit der dazugehörenden Empfangsoptik oder ein Lichtsender mit der dazugehörigen Sendeoptik eingespart werden kann, ohne dass sich dabei das Detektionsvermögen des Lichtgitters verringert oder die Gefahr des Übersprechens zwischen den einzelnen Lichtstrahlen hervorgerufen wird.

In einer Abwandlung des Erfindungsgedankens ist es vorgesehen, die beiden Lichtstrahlen in der Doppellichtstrahlenanordnung zeitgleich zu aktivieren. Damit ist es beispielsweise möglich, dass das Licht von zwei Lichtsendern gleichzeitig auf eine Empfangsoptik auftrifft, die auf einem ortsauflösenden Lichtempfänger zwei geometrisch getrennte Lichtspots erzeugt. Dadurch ist es möglich, die beiden Lichtstrahlen in der Doppellichtstrahlenanordnung getrennt auszuwerten.

Eine Modifikation dieses Erfindungsgedankens, bei dem das Licht von zwei Lichtsendern gleichzeitig auf eine Empfangsoptik auftrifft oder bei der das Licht von einem Lichtsender gleichzeitig von zwei Lichtempfängern erfasst wird, kann in vorteilhafter Weise dazu verwendet werden, die mögliche Reichweite des Lichtgitters d. h. die Tiefe der Überwachungsfläche zu vergrößern.

Die Erfindung wird im Folgenden beispielhaft unter Bezugnahme auf die Zeichnungen im Einzelnen erläutert.

In den Zeichnungen zeigen:
- Fig. 1: in schematischer Darstellung einen Ausschnitt eines Lichtgitters, bei dem jeweils zwei Lichtsender mit einem Lichtempfänger eine Doppel- lichtstrahlenanordnung bilden und bei der die beiden Lichtstrahlen der Doppellichtstrahlenanordnung unterschiedliche spektrale Eigen- schaften aufweisen.
- Fig. 2: in schematischer Darstellung einen Ausschnitt eines Lichtgitters, bei dem ein Lichtsender mit jeweils zwei Lichtempfängern eine Doppel- lichtstrahlenanordnung bilden und bei der die beiden Lichtstrahlen der Doppellichtstrahlenanordnung gegensätzlich orientierte Polarisations- eigenschaften haben.
- Fig. 3: in schematischer Darstellung einen Ausschnitt eines Lichtgitters, bei dem jeweils zwei Lichtsender mit einem positionsempfindlichen Licht- empfänger eine Doppellichtstrahlenanordnung bilden.
- Fig. 4: in schematischer Darstellung einen Ausschnitt eines Lichtgitters, bei dem jeweils zwei benachbarte Lichtsender mit einem Lichtempfänger eine Doppellichtstrahlenanordnung in wechselnder Kombination bil- den.

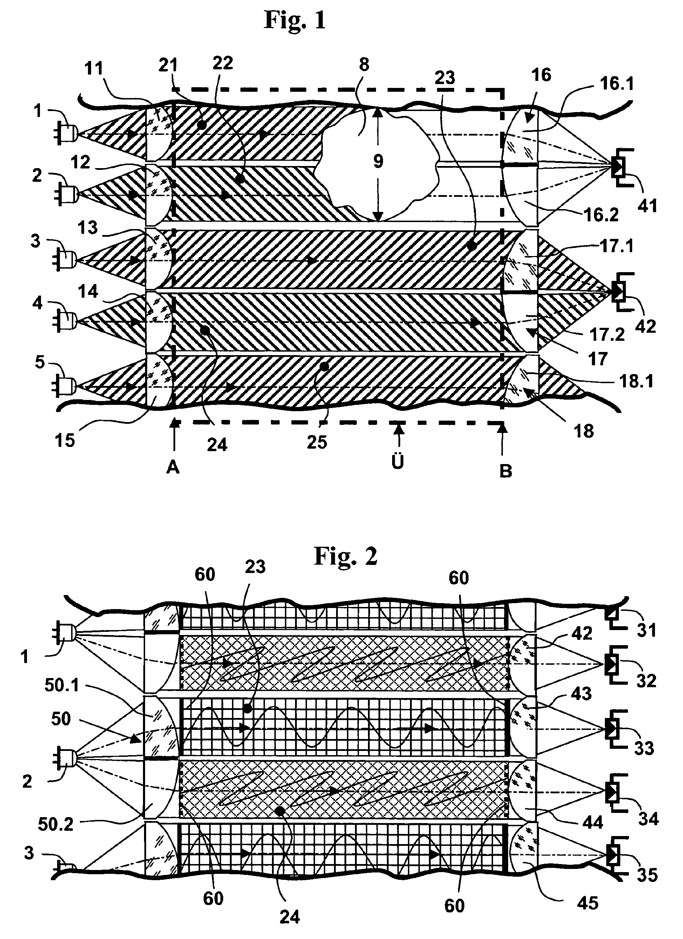

Aus der Darstellung in Figur 1 ist ein Ausschnitt eines Lichtgitters, das an einer Überwachungsfläche Ü angebracht ist, zu sehen. In dem Ausschnitt des Lichtgitters sind an einem Rand A der Überwachungsfläche Ü fünf Lichtsender 1, 2, 3, 4 und 5 sichtbar. Jedem der Lichtsender 1 bis 5 ist eine Sendelinse 11, 12, 13, 14 und 15 zugeordnet. An dem gegenüberliegenden Rand B der Überwachungsfläche Ü sind die zwei Empfangsoptiken 16 und 17 sowie Teile von der Empfangsoptik 18 zu sehen. Die Empfangsoptik 16 ist dabei justiert zu einem Lichtempfänger 41, während die Empfangsoptik 17 zu einem Lichtempfänger 42 justiert ist. Jede der Empfangsoptik 16 bis 18 ist geteilt in die zwei Pupillenhälften. Damit hat die Empfangsoptik 16 eine Empfangsöffnung 16.1 und 16.2, die Empfangsoptik 17 eine Empfangsöffnung 17.1 und 17.2 und so weiter. Von der Empfangsoptik 18 ist in der Ausschnittsdarstellung jedoch nur die Empfangsöffnung 18.1 teilweise zu erkennen. Zwischen den Sendelinsen 11 bis 15 und den Empfangsöffnungen 16.1, 16.2, 17.1, 17.2 und 18.1 sind fünf Lichtstrahlen 21, 22, 23, 24 und 25 dargestellt.

Die beiden Lichtstrahlen 23 und 24 werden von der Empfangsoptik 17 dem Lichtempfänger 42 zugeführt und stellen somit eine Doppellichtstrahlenanordnung dar. Während die Lichtstrahlen 23 und 24 dieser Doppellichtstrahlenanordnung die Überwachungsfläche Ü ungehindert durchdringen können, werden die Lichtstrahlen 21 und 22, welche ebenfalls eine Doppellichtstrahlenanordnung bilden, von einem Objekt 8 unterbrochen und können deshalb nicht dem Lichtempfänger 41 zugeführt werden.

Das in Figur 1 dargestellte Objekt 8 hat insbesondere rechtwinklig zur Ausbreitungsrichtung der Lichtstrahlen 22 und 23 eine Objektausdehnung 9, die gerade so groß bemessen ist, dass die beiden Lichtstrahlen 21 und 22 vollständig unterbrochen werden. Dieses Objekt 8, das bei der in Figur 1 dargestellten Situation gerade zwei benachbarte Lichtstrahlen vollständig unterbricht, kann innerhalb der Überwachungsfläche an jeden Ort plaziert sein und wird dabei sicher immer einen Lichtstrahl vollständig unterbrechen. Aus diesem Grund ist diese Objektausdehnung 9 auch gleichzusetzen mit dem Detektionsvermögen des Lichtgitters.

Im Überwachungsmodus werden die einzelnen Lichtsender und Lichtempfänger des Lichtgitters von einer in den Figuren nicht dargestellten Steuereinheit nach einem vorgegebenen Zeitplan aktiviert. Dies bedeutet, dass zum Beispiel zunächst nur der Lichtsender 1 und der Lichtempfänger 41 kurzzeitig aktiviert wird. Anschließend wird nur der Lichtsender 2 und der Lichtempfänger 41 kurzzeitig aktiviert. In der Folge wird nur der Lichtsender 3 und der Lichtempfänger 42 aktiviert und sodann nur der Lichtsender 4 und der Lichtempfänger 42. Nach diesem Prinzip werden in kurzer zeitlicher Folge alle Lichtstrahlen im Lichtgitter nacheinander aktiviert. Dieser Vorgang wird während des Überwachungsmodus laufend zyklisch wiederholt. Damit eine betriebssichere Funktion des Lichtgitters auch denn gewährleistet ist, wenn die optische Justage, d. h. die Ausrichtung der Lichtsender zu den Lichtempfängern und umgekehrt nicht optimal vorhanden ist, sind die Sendelinsen 11 bis 15 so demissioniert, dass die austretenden Lichtstrahlen die Form eines sich öffnenden Sendekegels aufweisen. In analoger Weise sind die Empfangsoptiken 16 und 17 so demissioniert, dass sie alles Licht aufnehmen, das aus einem bestimmten Empfangskegel in die Empfangsoptik 16, 17 einfällt und dieses Licht dann dem Lichtempfänger 41 beziehungsweise dem Lichtempfänger 42 zuführen. Dadurch wird sichergestellt, dass auch bei einer nicht hundertprozentigen Ausrichtung der Lichtsender beziehungsweise der Lichtempfänger die Funktionssicherheit des Lichtgitters gewährleistet ist. Damit diese notwendige Divergenz im Sendekegel beziehungsweise die Konvergenz im Empfangskegel nicht dazu führt, dass beispielsweise Lichtanteile, die aus der Sendelinse 13 in die Überwachungsfläche Ü gesendet werden, über die Empfangsöffnung 17.2 zum Lichtempfänger 42 gelangen können, haben die beiden Lichtstrahlen 23 und 24, die mit dem gleichen Lichtempfänger 42 eine Doppellichtstrahlenanordnung bilden, jeweils eine unterschiedliche spektrale Eigenschaft. So ist zum Beispiel die Farbe der Lichtstrahlen 21, 23 und 25 rot, während die Farbe der Lichtstrahlen 22 und 24 grün ist. Dies kann zum Beispiel dadurch realisiert werden, dass die Lichtsender 1, 3 und 5 selbst nur rotes Licht abgeben oder dass mit Hilfe eines zusätzlichen optischen Filters nur rotes Licht über die Sendelinsen 11, 13 und 15 in die Überwachungsfläche Ü gelangen kann. In analoger Weise ist diese spektrale Selektion auch bei den Lichtsendern 2 und 4 möglich. In gleicher Weise sind auf der Empfangsseite Maßnahmen zur unterschiedlichen spektralen Befilterung der beiden Empfangsöffnungen 16.1 und 16.2 beziehungsweise 17.1 und 17.2 vorhanden. Dies kann zum Beispiel dadurch realisiert werden, dass zusätzliche optische Filter eingesetzt werden oder dass die Empfangsoptik aus zwei Komponenten mit unterschiedlichen Transmissionseigenschaften hergestellt ist.

In Figur 2 wird im Gegensatz zur Figur 1 gezeigt, dass es ebenfalls möglich ist, mit einem Lichtsender 2 und zwei Lichtempfängern 32 und 33 eine Doppellichtstrahlenanordnung zu realisieren. In Figur 2 wird dies unter anderem mit den beiden Lichtstrahlen 23 und 24 gezeigt. Dazu ist durch eine Pupillenteilung eine Sendeoptik 50 in zwei Sendeöffnungen 50.1 und 50.2 unterteilt. Beiden Lichtempfängern 32 und 33 ist jeweils eine eigene Empfangslinse 42, 43 zugeordnet. Im Überwachungsmodus werden zum Beispiel zunächst der Lichtsender 2 und nur der Lichtempfänger 33 kurzzeitig aktiviert. Anschließend ist der Lichtsender 2 und nur der Lichtempfänger 34 kurzzeitig aktiviert. In der Folge werden in analoger Weise alle weiteren Doppellichtstrahlenanordnungen aktiviert. Weiterhin wird in Figur 2 gezeigt, dass die beiden eine Doppellichtstrahlenanordnung bildenden Lichtstahlen 23 und 24, unterschiedlich oder gegensätzlich orientierte Polarisationseigenschaften aufweisen. So ist es zum Beispiel durch den Einsatz von jeweils einem Polarisationsfilter 60 an der Sendeöffnung 50.1 und 50.2 und an der Empfangslinse 43 und 44 möglich, dass beispielsweise im Lichtstrahl 23 linear polarisiertes Licht mit senkrechter Schwingungsebene und im Lichtstrahl 24 linear polarisiertes Licht mit waagerechter Schwingungsebene vorhanden ist. Es ist aber auch möglich, dass zur Erzeugung von unterschiedlich oder gegensätzlich orientierten Polarisationseigenschaften rechts- und linkszirkulare Polarisationsfilter eingesetzt werden. In beiden Fällen wird sichergestellt, dass kein Licht von der Sendeöffnung 50.1 über die Empfangsoptik 44 zum Lichtempfänger 34 und kein Licht von der Sendeöffnung 50.2 über die Empfangsoptik 43 zum Lichtempfänger 33 gelangen kann.

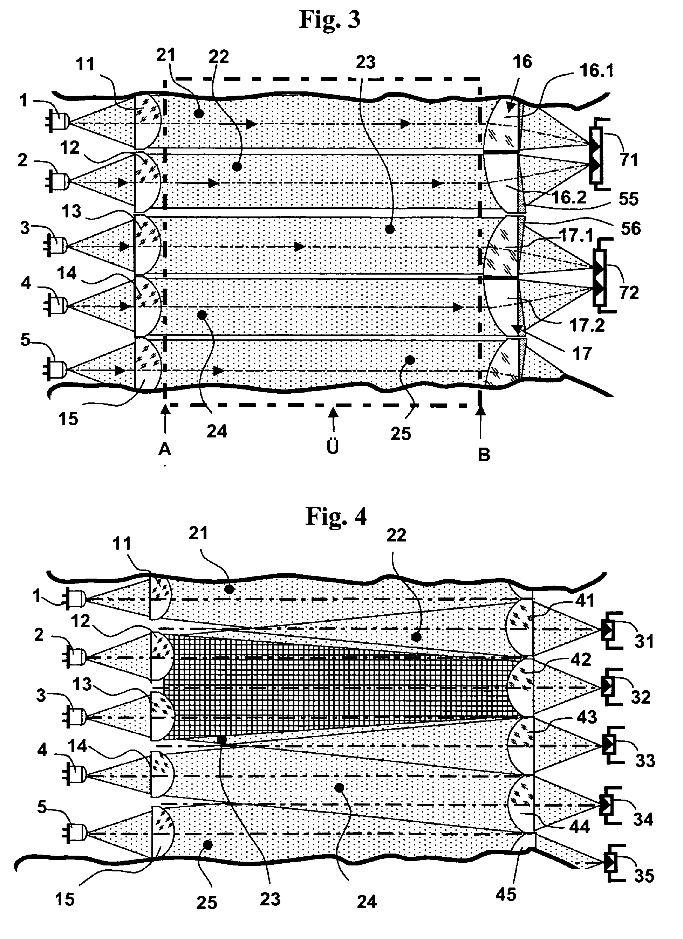

In Figur 3 ist in schematischer Darstellung ebenfalls ein Ausschnitt von einem Lichtgitter zu sehen, das an einer Überwachungsfläche Ü angebracht ist. Wie in Figur 1 sind in Figur 3 an dem Rand A der Überwachungsfläche Ü fünf Lichtsender 1, 2, 3, 4 und 5 sichtbar. Jedem der Lichtsender 1 bis 5 ist eine Sendelinse 11, 12, 13, 14 und 15 zugeordnet. An dem gegenüberliegenden Rand B der Überwachungsfläche Ü sind zwei Empfangsoptiken 16 und 17 zu sehen, die wiederum in zwei Pupillenhälften, d. h. in die Empfangsöffnung 16.1 und 16.2 beziehungsweise in die Empfangsöffnung 17.1 und 17.2 aufgeteilt sind. In dieser Anordnung werden somit durch die Lichtstrahlen 21 und 22 beziehungsweise 23 und 24 zwei Doppellichtstrahlenanordnungen gebildet, welche die Überwachungsfläche Ü ungehindert durchdringen können. Gleichzeitig ist an jeder Empfangsöffnung 16.1 und 16.2, sowie an der Empfangsöffnung 17.1 und 17.2 ein optischer Keil 55, 56 angebracht. Dieser bewirkt, dass die Lichtstrahlen aus der Empfangsöffnung 16.1 und aus der Empfangsöffnung 16.2, zwei getrennte Lichtpunkte in der lichtempfindlichen Ebene eines positionsempfindlichen Lichtempfängers 71 hervorrufen. In gleicher Weise werden auch auf dem positionsempfindlichen Lichtempfänger 72 zwei getrennte Lichtpunkte erzeugt, die von den beiden Empfangsöffnungen 17.1 und 17.2 ausgehen. Die Wirkung, welche mit den beiden optischen Keilen 55, 56 erzielt wird, kann beispielsweise auch dadurch erreicht werden, dass in der Empfangsoptik 16, 17 die beiden Optikhälften jeder Empfangsöffnung eine geringe Dezentrierung in Richtung ihres Abstands zueinander aufweisen. Mit dem Einsatz der positionsempfindlichen Lichtempfänger 71, 72 ist es möglich, dass im Überwachungsmodus die Lichtsender 1 und 2 beziehungsweise die Lichtsender 3 und 4 zusammen mit dem jeweiligen positionsempfindlichen Lichtempfänger 71, 72 gleichzeitig aktiviert werden, weil die positionsempfindlichen Lichtempfänger 71, 72 eine getrennte Erfassung der beiden Lichtpunkte erlaubt. Auf diese Weise kann die Zeitdauer für einen kompletten Überwachungszyklus des Lichtgitters deutlich verkürzt werden.

In Figur 4 ist ausschnittsweise eine weitere Variante eines Lichtgitters dargestellt, bei dem jeweils zwei benachbarte Lichtsender mit einem Lichtempfänger eine Doppellichtstrahlenanordnung in wechselnder Kombination bilden. Zu sehen sind dabei die Lichtsender 1 bis 5 mit der jeweiligen Sendelinse 11 bis 15. Ebenfalls sind die Empfangslinsen 41 bis 45 zu sehen, die zu den Lichtempfängern 31 bis 35 ausgerichtet sind. Zwischen den Sendelinsen 11 bis 15 und den Empfangslinsen 41 bis 45 sind die Lichtstrahlen 21 bis 25 zu erkennen. In dieser Darstellung ist zu erkennen, dass die Lichtstrahlen einen deutlichen Divergenzwinkel besitzen. D. h. jeder ausgesandte Lichtstrahl leuchtet mindestens zwei benachbarte Empfangslinsen aus. Im Überwachungsmodus werden nun beispielsweise der Lichtsender 1, der Lichtsender 2 und der Lichtempfänger 31 gleichzeitig aktiviert. Im Anschluß daran wird der Lichtsender 2 zusammen mit dem Lichtsender 3 und dem Lichtempfänger 32 aktiviert. Dadurch entsteht jeweils ein kurzzeitiger Doppellichtstrahl, der sich aus Anteilen von zwei benachbarten Lichtstrahlen zusammensetzt. In dieser Weise wird die gesamte Überwachungsfläche in zyklischer Folge fortlaufend kontrolliert. Das Detektionsvermögen des Lichtgitters in diesem Überwachungsmodus ist gegenüber der in Figur 1 gezeigten Variante dahingehend verändert, dass ein Objekt, das sicher an jeder Stelle innerhalb der Überwachungsfläche erkannt werden muss, mindestens drei benachbarte Sendeobjektive gleichzeitig abdecken muss. Die jedoch damit gewonnene höhere Lichtstrahlenergie erlaubt es, dass damit größere Distanzen zwischen den Seiten A und B der Überwachungsfläche überbrückt werden können.

### Bezugszeichenliste

- 1, 2, 3, 4, 5: Lichtsender
- 8: Objekt
- 9: Objektausdehnung
- 11, 12, 13, 14, 15: Sendelinse
- 16, 17, 18: Empfangsoptik
- 16.1, 16.2, 17.1, 17.2, 18.1: Empfangsöffnung
- 21,22,23,24,25: Lichtstrahl
- 31, 32, 33, 34, 35: Lichtempfänger
- 41, 42, 43, 44, 45: Empfangslinse
- 50: Sendeoptik
- 50.1, 50.2: Sendeöffnung
- 55, 56: optischer Keil
- 60: Polarisationsfilter
- 71, 72: positionsempfindlicher Lichtempfänger
- A: Rand der Überwachungsfläche
- B: Rand der Überwachungsfläche
- Ü: Überwachungsfläche

## Patentansprüche

1. Verfahren zur berührungslosen Erfassung eines Objekts (8) innerhalb einer Überwachungsfläche (Ü), wobei an einem Rand der Überwachungsfläche (A) mehrere nebeneinander angeordnete Lichtsender (1, 2, 3, 4, 5) mit einer Sendelinse (11, 12, 13, 14, 15) und an dem gegenüberliegenden Rand der Überwachungsfläche (B) mehrere nebeneinander angeordnete Lichtempfänger (31, 32, 33, 34, 35) mit einer Empfangslinse (41, 42, 43, 44, 45) angeordnet sind, die von einer Steuereinheit zyklisch aktiviert werden, so dass die Überwachungsfläche (Ü) mit mehreren parallel zueinander angeordneten Lichtstrahlen (21, 22, 23, 24, 25) durchdrungen wird, **dadurch gekennzeichnet, dass** zwei benachbarte Lichtsender (1, 2, 3, 4, 5) mit einem Lichtempfänger (31, 32, 33, 34, 35) eine Doppellichtstrahlanordnung bilden, wobei ein erster Lichtsender (1) und der Lichtempfänger (41) kurzzeitig aktiviert wird und anschließend ein zweiter Lichtsender (2) und der Lichtempfänger (41) kurzzeitig aktiviert wird oder ein Lichtsender (2) mit zwei benachbarten Lichtempfängern (33, 34) eine Doppellichtstrahlenanordnung bilden, wobei ein erster Lichtempfänger (33) und der Lichtsender (2) kurzzeitig aktiviert wird und anschließend ein zweiter Lichtempfänger (34) und der Lichtsender (2) aktiviert wird, wobei die beiden Lichtstrahlen (23, 24) der Doppellichtstrahlenanordnung von der Steuereinheit getrennt aktiviert werden oder dass das Licht von zwei Lichtsendern (1, 2, 3, 4, 5) gleichzeitig auf eine Empfangsoptik (16, 17) auftrifft, die auf einem ortsauflösenden Lichtempfänger (71, 72) zwei geometrisch getrennte Lichtspots erzeugt und dabei die beiden Lichtstrahlen (21, 22, 23, 24, 25) sich gegenseitig nicht beeinflussende optische Strahleigenschaften aufweisen.

2. Verfahren nach Anspruch 1, **dadurch gekennzeichnet, dass** die beiden Lichtstrahlen (21, 22, 23, 24, 25) der Doppellichtstrahlenanordnung unterschiedliche spektrale Transmissionseigenschaften aufweisen und von der Steuereinheit zeitlich versetzt aktiviert werden.

3. Verfahren nach Anspruch 1, **dadurch gekennzeichnet, dass** die beiden Lichtstrahlen (21, 22, 23, 24, 25) der Doppellichtstrahlenanordnung unterschiedlich oder gegensätzlich orientierte Polarisationseigenschaften haben und von der Steuereinheit zeitlich versetzt aktiviert werden.

4. Verfahren nach Anspruch 1, **dadurch gekennzeichnet, dass** die beiden Lichtstrahlen (21, 22, 23, 24, 25) der Doppellichtstrahlenanordnung gleiche optische Strahleigenschaften haben und von der Steuereinheit zeitgleich aktiviert werden.

5. Lichtgitter zur berührungslosen Erfassung eines Objekts (8) innerhalb einer Überwachungsfläche (Ü), wobei an einem Rand der Überwachungsfläche (A) mehrere nebeneinander angeordnete Lichtsender (1, 2, 3, 4, 5) mit einer Sendelinse (11, 12, 13, 14, 15) und an dem gegenüberliegenden Rand der Überwachungsfläche (B) mehrere nebeneinander angeordnete Lichtempfänger (31, 32, 33, 34, 35) mit einer Empfangslinse (41, 42, 43, 44, 45) angeordnet sind, die von einer Steuereinheit zyklisch aktiviert werden, so dass die Überwachungsfläche (Ü) mit mehreren parallel zueinander angeordneten Lichtstrahlen (21, 22, 23, 24, 25) durchdrungen wird, **dadurch gekennzeichnet, dass** zwei benachbarte Lichtsender (1, 2, 3, 4, 5) mit einem Lichtempfänger (31, 32, 33, 34, 35) oder ein Lichtsender (1, 2, 3, 4, 5) mit zwei benachbarten Lichtempfängern (31, 32, 33, 34, 35) eine Doppellichtstrahlenanordnung bilden, wobei zur zeitlich getrennten Aktivierung der beiden Lichtstrahlen (21, 22, 23, 24, 25) der Doppellichtstrahlenanordnung eine Steuereinheit vorhanden ist und dass jeweils eine für beide Lichtstrahlen gemeinsame Empfangsoptik (16, 17, 18) oder Sendeoptik (50) in ihrem Querschnitt in Form einer Pupillenteilung geometrisch in zwei optisch getrennte, sich gegenseitig nicht beeinflussende Querschnittsbereiche aufgeteilt ist.

6. Lichtgitter nach Anspruch 5, **dadurch gekennzeichnet, dass** zur Pupillenteilung die beiden Querschnittsbereiche in der Empfangsoptik (16, 17, 18) oder in der Sendeoptik (50) aus einem Werkstoff mit unterschiedlichen spektralen Transmissionseigenschaften hergestellt sind.

7. Lichtgitter nach Anspruch 6, **dadurch gekennzeichnet, dass** zur Herstellung von Bereichen mit unterschiedlichen spektralen Transmissionseigenschaften optische Filter aus Glas oder Kunststoff verwendet werden.

8. Lichtgitter nach Anspruch 6, **dadurch gekennzeichnet, dass** zur Pupillenteilung die beiden Querschnittsbereiche in der Empfangsoptik (16, 17, 18) oder in der Sendeoptik (50) halbseitig mit Interferenzschichten zur Bildung unterschiedlicher spektraler Transmissionseigenschaften beschichtet sind.

9. Lichtgitter nach Anspruch 5, **dadurch gekennzeichnet, dass** zur Pupillenteilung die beiden Querschnittsbereiche in der Empfangsoptik (16, 17, 18) oder in der Sendeoptik (50) mit unterschiedlich orientierten Polarisationsfilter versehen sind.

10. Lichtgitter nach Anspruch 5, **dadurch gekennzeichnet, dass** zum Empfang der beiden Lichtstrahlen (21, 22, 23, 24) der Doppellichtstrahlenanordnung in der Bildebene einer Empfangsoptik ein positionsempfindlicher Lichtempfänger (71, 72) vorhanden ist.

## Claims

1. A method for the contact-free detection of an object (8) within a monitoring zone (Ü), wherein a plurality of adjacent light transmitters (1, 2, 3, 4, 5) having a transmission lens (11, 12, 13, 14, 15) are arranged at a boundary of the monitoring zone (A) and a plurality of adjacent light receivers (31, 32, 33, 34, 35) having a receiving lens (41, 42, 43, 44, 45) are arranged at an opposite boundary of the monitoring zone (B) which can be cyclically activated by a control unit so that the monitoring zone (Ü) can be penetrated by a plurality of light beams (21, 22, 23, 24, 25) aligned in parallel to one another, **characterized in that** two adjacent light transmitters (1, 2, 3, 4, 5) form a double light beam arrangement with a light receiver (31, 32, 33, 34, 35), wherein a first light transmitter (1) and the light receiver (41) are activated for a short time and subsequently a second light transmitter (2) and the light receiver (41) are activated for a short time or a light transmitter (2) forms a double light beam arrangement with two adjacent light receivers (33, 34), wherein a first light receiver (33) and the light transmitter (2) are activated for a short time and subsequently a second light receiver (34) and the light transmitter (2) are activated, wherein the two light beams (23, 24) of the double light beam arrangement can be activated separately by the control unit or **in that** the light from two light transmitters (1, 2, 3, 4, 5) is simultaneously incident on a receiving optics (16, 17) which generates two geometrically separated light spots on a spatially resolving light receiver (71, 72) and in this respect the two light beams (21, 22, 23, 24, 25) have optical beam properties which do not influence one another.

2. A method in accordance with claim 1 **characterized in that** the two light beams (21, 22, 23, 24, 25) of the double light beam arrangement have different spectral transmission properties and are activated offset in time by the control unit.

3. A method in accordance with claim 1 **characterized in that** the two light beams (21, 22, 23, 24, 25) of the double light beam arrangement have different or oppositely orientated polarization properties and are activated offset in time by the control unit.

4. A method in accordance with claim 1 **characterized in that** the two light beams (21, 22, 23, 24, 25) of the double light beam arrangement have the same optical properties and are activated at the same time by the control unit.

5. A light grid for the contact-free detection of an object (8) within a monitoring zone (Ü), wherein a plurality of adjacent light transmitters (1, 2, 3, 4, 5) having a transmission lens (11, 12, 13, 14, 15) are arranged at a boundary of the monitoring zone (A) and a plurality of adjacent light receivers (31, 32, 33, 34, 35) having a receiving lens (41, 42, 43, 44, 45) are arranged at an opposite boundary of the monitoring zone (B) which can be cyclically activated by the control unit, so that the monitoring zone (Ü) are penetrated by a plurality of light beams (21, 22, 23, 24, 25) which are arranged in parallel to one another, **characterized in that** two adjacent light transmitters (1, 2, 3, 4, 5) form a double light beam arrangement with a light receiver (31, 32, 33, 34, 35), or a light transmitter (1, 2, 3, 4, 5) forms a double light beam arrangement with two adjacent light receivers (31, 32, 33, 34, 35), wherein a control unit is provided for the time separated activation of the two light beams (21, 22, 23, 24, 25) of the double light beam arrangement and **in that** a respective receiving optics (16, 17, 18) or transmission optics (50) common for both light beams and being divided geometrically in its cross section in the form of an aperture division into two optically separated cross section regions which do not influence one another.

6. A light grid in accordance with claim 5 **characterized in that** for the aperture division the two cross section regions of the receiving optics (16, 17, 18) or of the transmission optics (50) are produced from a material having different spectral transmission properties.

7. A light grid in accordance with claim 6 **characterized in that** optical filters composed of glass or plastic are used for the manufacture of regions with different spectral transmission properties.

8. A light grid in accordance with claim 6 **characterized in that**, for the aperture division, the two cross section regions in the receiving optics (16, 17, 18) or in the transmission optics (50) are coated at a half side with interference layers for the formation of different spectral transmission properties.

9. A light grid in accordance with claim 5 **characterized in that**, for the aperture division, the two cross section regions of the receiving optics (16, 17, 18) or of the transmission optics (50) are provided with differently orientated polarization filters.

10. A light grid in accordance with claim 5 **characterized in that** a position sensitive light receiver (71, 72) is provided for the reception of the two light beams (21, 22, 23, 24) of the double light beam arrangement in an image plane of a receiving optics.

## Revendications

1. Procédé pour la détection sans contact d'un objet (8) à l'intérieur d'une surface à surveiller (U), dans lequel à une bordure de la surface à surveiller (A) on agence plusieurs émetteurs de lumière (1, 2, 3, 4, 5) les uns à côté des autres avec une lentille d'émission (11, 12, 13, 14, 15) et on agence plusieurs récepteurs de lumière (31, 32, 33, 34, 35) les uns à côté des autres à la bordure opposée de la surface à surveiller (B) avec une lentille de réception (41, 42, 43, 44, 45), lesquels sont activés de manière cyclique par une unité de commande de telle façon que la surface à surveiller (U) est traversée par plusieurs rayons lumineux (21, 22, 23, 24, 25) agencés parallèlement les uns aux autres, **caractérisé en ce que** deux émetteurs de lumière voisins (1, 2, 3, 4, 5) forment avec un récepteur de lumière (31, 32, 33, 34, 35) un agencement à double rayon lumineux, dans lequel un premier émetteur de lumière (1) et le récepteur de lumière (41) sont activés brièvement et ensuite un second émetteur de lumière (2) et le récepteur de lumière (41) sont activés brièvement, ou bien un émetteur de lumière (2) avec deux récepteurs de lumière voisins (33, 34) forment un agencement à double rayon lumineux, dans lequel un premier récepteur de lumière (33) et l'émetteur de lumière (2) sont activés brièvement et ensuite un second récepteur de lumière (34) et l'émetteur de lumière (2) sont activés, de sorte que les deux rayons lumineux (23, 24) de l'agencement à double rayon lumineux sont activés séparément, ou bien **en ce que** la lumière de deux émetteurs de lumière (1, 2, 3, 4, 5) tombe simultanément sur une optique de réception (16, 17) qui engendre deux taches lumineuses géométriquement séparées sur un récepteur de lumière (71, 72) à résolution locale et les deux rayons lumineux (21, 22, 23, 24, 25) présentent ici et des propriétés optiques qui ne s'influencent pas réciproquement.

2. Procédé selon la revendication 1, **caractérisé en ce que** les deux rayons lumineux (21, 22, 23, 24, 25) de l'agencement à double rayon lumineux présentent des propriétés de transmission spectrale différentes et sont activés de façon décalée dans le temps par l'unité de commande.

3. Procédé selon la revendication 1, **caractérisé en ce que** les deux rayons lumineux (21, 22, 23, 24, 25) de l'agencement à double rayon lumineux possèdent des propriétés de polarisation différentes ou orientées en sens opposé et sont activés de façon décalée dans le temps par l'unité de commande.

4. Procédé selon la revendication 1, **caractérisé en ce que** les deux rayons lumineux (21, 22, 23, 24, 25) de l'agencement à double rayon lumineux possèdent des propriétés optiques identiques et sont activés simultanément par l'unité de commande.

5. Grille lumineuse pour la détection sans contact d'un objet (8) à l'intérieur d'une surface à surveiller (U), dans laquelle à une bordure de la surface à surveiller (A) plusieurs émetteurs de lumière (1, 2, 3, 4, 5) sont agencés les uns à côté des autres avec une lentille d'émission (11, 12, 13, 14, 15) et plusieurs récepteurs de lumière (31, 32, 33, 34, 35) sont agencés les uns à côté des autres à la bordure opposée de la surface à surveiller (B) avec une lentille de réception (41, 42, 43, 44, 45), lesquels sont activés de manière cyclique par une unité de commande de telle façon que la surface à surveiller (U) est traversée par plusieurs rayons lumineux (21, 22, 23, 24, 25) agencés parallèlement les uns aux autres, **caractérisée en ce que** deux émetteurs de lumière voisins (1, 2, 3, 4, 5) forment avec un récepteur de lumière (31, 32, 33, 34, 35) ou bien un émetteur de lumière forme avec deux récepteurs de lumière voisins (31, 32, 33, 34, 35) un agencement à double rayon lumineux, et pour activer séparément dans le temps les deux rayons lumineux (21, 22, 23, 24, 25) de l'agencement à double rayon lumineux il est prévu une unité de commande, et **en ce qu'**une optique de réception (16, 17, 18) ou une optique d'émission (50) commune pour les deux rayons lumineux est subdivisée respectivement dans sa section transversale sous la forme d'une subdivision à la manière d'une pupille en deux zones de section transversale séparées qui ne s'influencent pas réciproquement.

6. Grille lumineuse selon la revendication 5, **caractérisée en ce que** pour la subdivision à la manière d'une pupille les deux zones de section transversale dans l'optique de réception (16, 17, 18) ou dans l'optique d'émission (50) sont réalisées en un matériau avec des propriétés de transmission spectrale différentes.

7. Grille lumineuse selon la revendication 6, **caractérisée en ce que** pour la réalisation de zones avec des propriétés de transmission spectrale différentes on utilise des filtres optiques en verre ou en matière plastique.

8. Grille lumineuse selon la revendication 6, **caractérisée en ce que**, pour la subdivision à la manière d'une pupille, les deux zones de section transversale dans l'optique de réception (16, 17, 18) ou dans l'optique d'émission (50) sont revêtues sur un demi-côté avec des couches d'interférence pour produire des propriétés de transmission spectrale différentes.

9. Grille lumineuse selon la revendication 5, **caractérisée en ce que** pour la subdivision à la manière d'une pupille, les deux zones de section transversale dans l'optique de réception (16, 17, 18) ou dans l'optique d'émission (50) sont dotées de filtres de polarisation avec des orientations différentes.

10. Grille lumineuse selon la revendication 5, **caractérisée en ce que** pour la réception des deux rayons de lumière (21, 22, 23, 24, 25) de l'agencement à double rayon lumineux, il est prévu un récepteur de lumière (71, 72) sensible vis-à-vis de la position dans le plan image d'une optique de réception.
